# EUROPEAN PATENT APPLICATION

(11) **EP 4 764 657 A1**
(43) Date of publication of application: **24.06.2026**
(21) Application number: 24864421.3
(22) Date of filing: 23.08.2024
(51) Int. Cl.: G02B 27/01

(54) **DISPLAY DEVICE, DISPLAY SYSTEM, AND VEHICLE**

(30) Priority: 15.09.2023 CN 202311201722
(71) Applicant: Yinwang Intelligent Technologies Co., Ltd., Shenzhen, Guangdong 518129 (CN)
(72) Inventor: WU, Qingli, Shenzhen, Guangdong 518129 (CN); FANG, Zhifang, Shenzhen, Guangdong 518129 (CN); WANG, Jun, Shenzhen, Guangdong 518129 (CN)
(74) Representative: Gill Jennings & Every LLP
(86) International application number: PCT/CN2024/114074
(87) International publication number: WO 2025/055698

(57) **Abstract**

Disclosed are a display apparatus (301) and a display system (1400), which may be used in a transportation means, for example, mounted on a seat back (302) or a seat headrest. The display apparatus (301) includes an image generation unit (401), a window unit (402), and an image magnification unit (403). The image generation unit (401) is configured to emit image light to the window unit (402). The window unit (402) reflects the image light from the image generation unit (401) to the image magnification unit (403), and transmits the image light from the image magnification unit (403). The image magnification unit (403) is configured to reflect the image light from the window unit (402) to the window unit (402). The display apparatus (301) has a small size and a simple structure, so that a user can view long-distance and large-format display effect through the window unit (402).

## Description

This application claims priority to Chinese Patent Application No. 202311201722.9, filed with the China National Intellectual Property Administration on September 15, 2023 and entitled "DISPLAY APPARATUS, DISPLAY SYSTEM, AND TRANSPORTATION MEANS", which is incorporated herein by reference in its entirety.

### TECHNICAL FIELD

Embodiments of this application relate to the field of display technologies and the field of intelligent vehicle driving technologies, and more specifically, to a display apparatus, a display system, and a transportation means.

### BACKGROUND

Vehicles have become an indispensable transportation means in people's daily life. With development of vehicle intelligence, people's requirements for use of the vehicles have evolved from simply serving as transportation means to being living space that provides a specific level of information access and entertainment. In light of this, in-vehicle display technologies become a popular research focus.

To meet entertainment needs of a person in the vehicle such as playing games and watching videos and improve entertainment experience, due to limited space inside the vehicle, current research on vehicle-mounted display devices is mainly focused on head-mounted augmented reality (augmented reality, AR)/virtual reality (virtual reality, VR)/mixed reality (mixed reality, MR) devices. However, such devices generally have disadvantages such as a large thickness, heavy weight, and small eye box, leading to poor user experience during prolonged use such as wearing discomfort and visual fatigue.

Therefore, how to break through a physical space limitation of a cabin and create new display experience is a problem to be resolved.

### SUMMARY

This application provides a display apparatus, a display system, and a transportation means. The display apparatus provided in this application can be arranged in narrow space such as on a seat back, a seat headrest, or a passenger-side dashboard of a vehicle, so that a small-sized image source can be magnified, large-format and long-distance visual experience can be provided for a viewer, and excellent performance such as a simple structure, a light weight, and good display effect is provided.

According to a first aspect, an embodiment of this application provides a display apparatus. The display apparatus is used for in-vehicle display. The display apparatus includes an image generation unit, a window unit, and an image magnification unit. The image generation unit is configured to emit image light to the window unit. The window unit is configured to: reflect the image light from the image generation unit to the image magnification unit, and transmit the image light from the image magnification unit, and the window unit is further used for a human eye to view, through the window unit, a virtual image formed by the image light. The image magnification unit is configured to reflect the image light from the window unit to the window unit.

Based on the foregoing solution, the display apparatus provided in this application has a simple structure, and avoids a plurality of lens groups, so that assembly is easy, a weight is light, a size is small, and the display apparatus is easily mounted in narrow space in a vehicle.

With reference to the first aspect, in some implementations of the first aspect, the window unit is tilted relative to a vertical direction.

The tilted window unit may enable the display apparatus in this embodiment of this application to be mounted in tilted space, for example, on a tilted seat back, a seat headrest, and a passenger-side dashboard, so that a mounting scenario of the display apparatus is increased, thereby providing a plurality of application scenarios.

With reference to the first aspect, in some implementations of the first aspect, a range of an included angle α between the window unit and the vertical direction is 0° ≤ α ≤ 45°.

With reference to the first aspect, in some implementations of the first aspect, the image generation unit is located above the window unit and the image magnification unit.

The image generation unit located above the window unit and the image magnification unit may prevent a viewer from viewing an image in the image generation unit when viewing an image inside the display apparatus through the window unit, thereby preventing poor viewing experience. Therefore, the image generation unit is arranged above the window unit and the image magnification unit, so that display effect can be improved, thereby improving user experience.

With reference to the first aspect, in some implementations of the first aspect, a range of a virtual image distance VID of the display apparatus is VID ≥ 2 m.

An imaging distance of the display apparatus provided in this application is long, so that visual fatigue of a user during long-time use can be reduced, thereby improving user experience.

With reference to the first aspect, in some implementations of the first aspect, a thickness of the display apparatus is related to the virtual image distance VID, a range of an eye box, and a field of view FOV that are of the display apparatus, and the thickness of the display apparatus is a maximum horizontal distance between the window unit and the image magnification unit.

With reference to the first aspect, in some implementations of the first aspect, a range of a vertical eye box H of the display apparatus is H ≥ 20 mm.

The range of the eye box of the display apparatus provided in this application is large, so that viewing effect of the user can be ensured, thereby improving user experience.

With reference to the first aspect, in some implementations of the first aspect, a range of the field of view FOV of the display apparatus is 15° ≤ FOV ≤ 30°.

With reference to the first aspect, in some implementations of the first aspect, an aspect ratio of the image generation unit is 21:9 or 16:9.

With reference to the first aspect, in some implementations of the first aspect, a range of light emission luminance Y of the image generation unit is Y ≥ 1000 nits.

With reference to the first aspect, in some implementations of the first aspect, the image generation unit further includes an anti-glare AG film.

The AG film is disposed in the image generation unit, so that interference caused by ambient light to the image generation unit can be reduced, and a contrast ratio and a viewing angle of a picture of the image generation unit can be further improved.

With reference to the first aspect, in some implementations of the first aspect, the image generation unit further includes a privacy protection film, or a collimation unit configured to narrow a light emitting angle of the image generation unit.

The privacy protection film or the collimation unit configured to narrow the light emitting angle of the image generation unit is disposed in the image generation unit, so that a viewing angle of the image light emitted by the image generation unit can be small, thereby improving light energy utilization and the display effect.

With reference to the first aspect, in some implementations of the first aspect, the image generation unit further includes a first quarter-wave plate.

The quarter-wave plate is disposed in the image generation unit, so that the image light emitted by the image generation unit is converted into circularly polarized light or elliptically polarized light, thereby improving uniformity of light emitted by an image unit. In addition, in cooperation with a window unit including the quarter-wave plate and a linear polarizer, stray light of an environment may be further eliminated, and optical efficiency of a system may be improved, thereby further improving the display effect.

With reference to the first aspect, in some implementations of the first aspect, the window unit sequentially comprises an inorganic layer and an organic layer in a transmission direction of the image light. The inorganic layer is specifically configured to: reflect the image light from the image generation unit, and transmit the image light from the image magnification unit to the organic layer. The organic layer is specifically configured to transmit the image light from the inorganic layer.

It should be noted that, in the solutions of this application, the organic layer may be thermoplastic, for example, a polypropylene (Polypropylene, PP) material, a polychloroprene (Polychloroprene, PC) material, or a polymethyl methacrylate (polymethyl methacrylate, PMMA) material. The inorganic layer may be inorganic glass, and has high flatness.

With reference to the first aspect, in some implementations of the first aspect, the window unit sequentially comprises an inorganic layer, a polarization layer, and an organic layer in a transmission direction of the image light, and the polarization layer is arranged on a first surface of the inorganic layer. The inorganic layer is specifically configured to: reflect the image light from the image generation unit, and transmit the image light from the image magnification unit to the polarization layer. The polarization layer is specifically configured to: eliminate stray light from outside the display apparatus, and transmit the image light from the inorganic layer to the organic layer. The organic layer is specifically configured to transmit the image light from the polarization layer.

With reference to the first aspect, in some implementations of the first aspect, the polarization layer includes a second quarter-wave plate and at least one linear polarizer.

A plurality of layers of linear polarizers are disposed, so that effect of eliminating the stray light by the display apparatus can be further improved, thereby improving display performance of the display apparatus.

With reference to the first aspect, in some implementations of the first aspect, a range of a thickness h1 of the inorganic layer is 1.2 mm ≤ h1 ≤ 2 mm, a thickness h2 of the polarization layer is 0.3 mm ≤ h2 ≤ 0.6 mm, and a range of a thickness h3 of the organic layer is 1 mm ≤ h3 ≤ 2.5 mm.

With reference to the first aspect, in some implementations of the first aspect, the window unit further includes a beam-splitting film. The beam-splitting film is arranged on a second surface of the inorganic layer. The beam-splitting film is configured to: reflect the image light from the image generation unit, and transmit the image light from the image magnification unit to the inorganic layer.

The beam-splitting film can improve reflection performance of the window unit, thereby reducing a light energy loss and improving the display effect.

With reference to the first aspect, in some implementations of the first aspect, the window unit further includes an anti-reflection film, and the anti-reflection film is arranged on an outer surface of the organic layer.

Reflection, on the display apparatus, of the stray light from outside the display apparatus is reduced by using the anti-reflection film, so that performance of the display apparatus can be further improved, thereby improving user experience.

With reference to the first aspect, in some implementations of the first aspect, the image magnification unit is a free-form mirror.

With reference to the first aspect, in some implementations of the first aspect, a total reflection film is arranged on an inner side of the image magnification unit.

A reflectivity of the image magnification unit to the image light is increased by using the total reflection film to reduce the light energy loss, so that the performance of the display apparatus can be further improved, thereby improving user experience.

With reference to the first aspect, in some implementations of the first aspect, the display apparatus further includes a housing.

With reference to the first aspect, in some implementations of the first aspect, rotation apparatuses are disposed on two sides of the housing, and the rotation apparatus is configured to manually or electrically drive the display system to rotate in the vertical direction.

By using the rotation apparatus, the display apparatus can rotate at different angles in the vertical direction, so that the display apparatus can adapt to users of different heights, thereby improving user experience.

With reference to the first aspect, in some implementations of the first aspect, the image generation unit is configured to generate an image based on predistortion-processed image information.

The image is generated based on the predistortion-processed image information, so that distortion present in the display apparatus can be compensated, thereby improving the display effect.

According to a second aspect, an embodiment of this application provides a processing device. The processing device includes an obtaining module, a sending module, and a processing module. The obtaining module is configured to obtain first image information. The processing module is configured to perform pre-distortion processing on a first image corresponding to the first image information to generate second image information corresponding to a second image. The sending module is configured to send the second image information to an image generation unit. The second image information is used for the image generation unit to generate the second image.

According to a third aspect, an embodiment of this application provides a display system. The system includes a first processor and the display apparatus according to the first aspect and any possible implementation of the first aspect, and the first processor is electrically connected to the image generation unit. The first processor is configured to: obtain first image information, perform pre-distortion processing on a first image corresponding to the first image information to generate second image information corresponding to a second image, and send the second image information to the image generation unit.

According to a fourth aspect, an embodiment of this application provides a transportation means. The transportation means includes the display system in the implementation of the third aspect.

With reference to the fourth aspect, in some implementations of the fourth aspect, the display system is arranged in at least one of a seat headrest of the transportation means and a seat back of the transportation means.

With reference to the fourth aspect, in some implementations of the fourth aspect, the display system is arranged on a passenger-side dashboard of the transportation means.

With reference to the fourth aspect, in some implementations of the fourth aspect, the first processor is configured to obtain first image information from a video source.

It should be noted that, when the first processor of the display system can directly obtain the first image information from the video source, the display system may be a display system pre-installed in a cabin before the transportation means is delivered from a factory, for example, a pre-installed system.

With reference to the fourth aspect, in some implementations of the fourth aspect, the transportation means further includes a second processor. The second processor is electrically connected to the first processor. The second processor is configured to: obtain third image information from the video source, and preprocess the third image information to generate the first image information.

It should be noted that the second processor may also be referred to as a vehicle companion, a companion box, or the like. Processing on image information from a video source includes but is not limited to image compression, enhanced restoration, matching description recognition, and the like. In addition, when the first processor of the display system obtains the first image information from the second processor, the display system may be a user-customized display system that is installed in a cabin after the transportation means is delivered from a factory, for example, an aftermarket system.

According to a fifth aspect, an embodiment of this application provides an in-vehicle display system. The in-vehicle system includes the display system in the implementation of the third aspect.

### BRIEF DESCRIPTION OF DRAWINGS

FIG. 1 is a diagram of a structure of an optical module 200;
FIG. 2 is a diagram of a structure of a head-mounted display device;
FIG. 3 is a diagram of an application scenario 300 of a display apparatus according to an embodiment of this application;
FIG. 4 is a diagram of a structure of a display apparatus 400 according to an embodiment of this application;
FIG. 5 is a diagram of a scenario in which a tilt direction of a display apparatus 400 according to an embodiment of this application is not parallel to a seat back plane;
FIG. 6 is a diagram of a principle in which an image generation unit is arranged above a window unit and an image magnification unit according to an embodiment of this application;
FIG. 7 is a diagram of a thickness D of a display apparatus and a width V of an image generation unit according to an embodiment of this application;
FIG. 8 shows a possible structure of an image generation unit 401 according to an embodiment of this application;
FIG. 9 is a diagram of a light exit angle θ of an image generation unit 401 according to an embodiment of this application;
FIG. 10 is a diagram of rotation of a display apparatus 400 according to an embodiment of this application;
FIG. 11 is a diagram of a structure of a first type of window unit 1100 according to an embodiment of this application;
FIG. 12 is a diagram of a structure of a second type of window unit 1200 according to an embodiment of this application;
FIG. 13 is a diagram of a principle of eliminating stray light by a window unit 1200 according to an embodiment of this application;
FIG. 14 is a diagram of a display system 1400 according to an embodiment of this application;
FIG. 15 is a diagram of performing pre-distortion processing on an image according to an embodiment of this application;
FIG. 16 is a diagram of a circuit of a display apparatus according to an embodiment of this application; and
FIG. 17 is a diagram of a possible functional framework of a transportation means according to an embodiment of this application.

### DESCRIPTION OF EMBODIMENTS

The following describes technical solutions in embodiments of this application with reference to accompanying drawings.

For ease of understanding of embodiments of this application, the following descriptions are provided.

First, in the following text descriptions or accompanying drawings in embodiments of this application, terms such as "first" and "second" and various numbers are merely used for differentiation for ease of description, for example, for distinguishing between processors in different directions, but do not necessarily describe a specific order or sequence, and are not intended to limit the scope of embodiments of this application.

Second, the terms "include", "have" and any other variants thereof in embodiments of this application shown below are intended to cover non-exclusive inclusion. For example, a system, product, or device that includes a series of units is not necessarily limited to those expressly listed units, but may include other units not expressly listed or inherent to such a product or device.

Third, in embodiments of this application, terms such as "example" or "for example" indicate giving an example, an illustration, or a description. Any embodiment or design scheme described as "example" or "for example" should not be explained as being more preferred or having more advantages than another embodiment or design scheme. Use of the terms such as "example" or "for example" is intended to present a related concept in a specific manner for ease of understanding.

Fourth, in embodiments of this application, image light is light carrying an image (or image information), and is used to generate an image.

Fifth, in the accompanying drawings of this application, for ease of description, a thickness, size, and shape of each optical element are slightly exaggerated. Specifically, shapes of optical elements shown in the accompanying drawings are shown by embodiments, and the accompanying drawings are merely examples and not drawn strictly to scale.

Sixth, unless otherwise limited, all terms (including technical and scientific terms) used in this application have same meanings as those usually understood by a person of ordinary skill in the art to which this application belongs. It should be further understood that terms (for example, terms defined in common dictionaries) should be explained as having meanings consistent with meanings of the terms in the context of related technologies, and do not be explained in a desirable sense or an excessively formal sense, unless expressly limited in this specification.

Seventh, it should be noted that, unless otherwise specified as a horizontal field of view or a vertical field of view, in the descriptions of this application, a field of view of a display apparatus is an angle corresponding to a diagonal length of a displayed image.

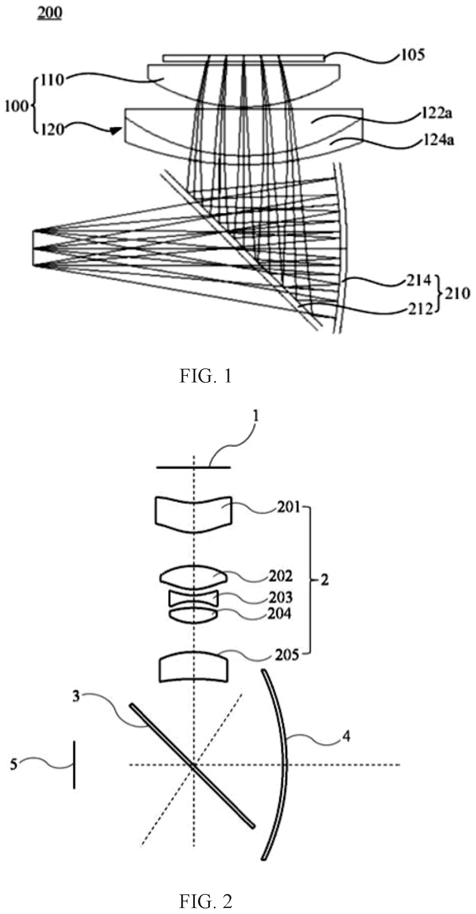

With rapid development of intelligent vehicles, the vehicles play increasing roles in people's life, leading to gradually growing requirements for in-vehicle display, for example, providing entertainment services such as playing games and watching movies for a person who rides for a long time, or providing a private office display environment for an office person. To provide an in-vehicle display function, directly mounting a display is a common solution. For example, a liquid crystal display (liquid crystal display, LCD) may be suspended on a vehicle roof or placed on a seat back for use by a person in a vehicle. However, space inside the vehicle is very limited. As a result, a size of the mounted display needs not be excessively large, and a viewing distance of the person in the vehicle is short (usually less than 1 m). This is prone to visual fatigue and dizziness. To achieve long-distance and large-format display effect, FIG. 1 is a diagram of a structure of an optical module 200. In FIG. 1, a convex lens 110, a glued lens 120 (including 122a and 124a), and an optical processing unit 210 (including 214 and 212) are sequentially disposed in the augmented reality optical module 200 in a light exit direction of an image source 105. However, because a lens assembly 100 in the optical module 200 includes the convex lens 110 and the glued lens 120, overall complexity of a product is increased, leading to complex product assembly and high costs and increasing a weight of an apparatus. Consequently, the optical module 200 is not easily mounted on space such as a seat back or a seat headrest, making it difficult to meet an application requirement for in-vehicle display. In addition, there is a solution of a head-mounted display device. As shown in FIG. 2, the head-mounted display device includes an image generation unit 1, a lens unit 2 (including 201 to 205), a first optical unit 3, and a second optical unit 4 that are sequentially disposed in an optical path. The image generation unit 1 is configured to: generate and transmit a light beam that carries image information. The lens unit 2 is configured to: transmit the light beam generated by the image generation unit, and reduce an effective focal length of a head-mounted display optical system. The first optical unit 3 is configured to: reflect and transmit the light beam. The second optical unit 4 is configured to reflect the light beam. The light beam reflected by the second optical unit 4 returns to the first optical unit 3, and enters user's eyes 5 after being transmitted by the first optical unit 3. It can be learned that the head-mounted display device still has a plurality of lenses, which also causes high system complexity and a large product size and thickness. When a user wears the head-mounted display device for a long time, comfort is poor. This is prone to poor experience such as dizziness and visual fatigue.

In view of this, this application provides a display apparatus and a display system, which have a simple structure, a small thickness, a light weight, and a small size, and therefore can be easily mounted in narrow space such as a seat headrest, a seat back, or a passenger-side dashboard. In addition, display effect is optimized according to a distortion pre-correction solution, so that excellent long-distance, large-format, high-imaging-quality display effect can be achieved.

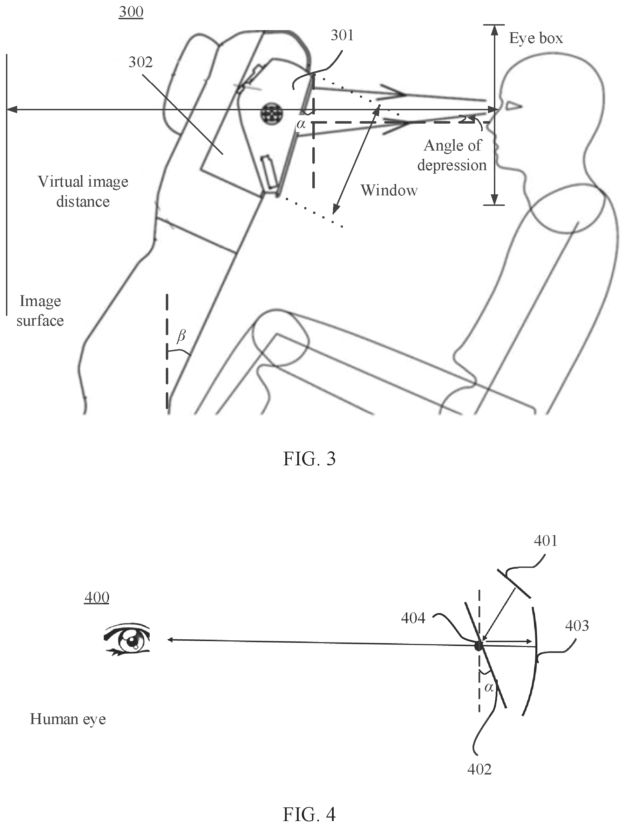

FIG. 3 is a diagram of an application scenario 300 of a display apparatus according to an embodiment of this application. As shown in FIG. 3, the display apparatus 301 is disposed on a seat back 302. The display apparatus 301 can generate a long-distance magnified virtual image through an input of an external video signal (which may also be referred to as a signal source), to provide large-format and long-distance visual experience for a viewer, so that requirements for a plurality of application scenarios such as leisure entertainment and business office can be met.

A light exit surface of the display apparatus 301 is a window, and a distance between an image surface of a virtual image formed by the display apparatus 301 and an eye box is a virtual image distance (virtual image distance, VID). The eye box is a range of eye movement within which an object can be seen clearly. A field of view (field of view, FOV) is an included angle formed, with eyes as a vertex, by two edges of a maximum range within which the eyes see a virtual image. In the solutions of this application, the field of view is specifically an included angle between two points on a horizontal plane of a center point of the virtual image, namely, a horizontal field of view.

It may be understood that, for example, in FIG. 3, the display apparatus 301 is mounted on a seat back of a transportation means, for example, a vehicle or an airplane, to form an in-vehicle virtual image display system. In some other scenarios, the display apparatus 301 may alternatively be mounted on a seat headrest of the transportation means, or mounted on a passenger-side dashboard of the transportation means. This is not limited in this application. In addition, the display apparatus 301 may be mounted on the following transportation means, including but not limited to a car, a truck, a bus, a ship, an airplane, a helicopter, a recreational vehicle, a train, and the like.

FIG. 4 is a diagram of a structure of a display apparatus 400 according to an embodiment of this application, which may be used in an in-vehicle display system. As shown in FIG. 4, the display apparatus 400 is arranged as an image generation unit 401, a window unit 402, and an image magnification unit 403 sequentially in an image light transmission direction. The image generation unit 401 is configured to emit image light to the window unit. The window unit 402 is configured to: reflect the image light from the image generation unit 401 to the image magnification unit 403, and transmit the image light from the image magnification unit 403. The window unit 402 is further used for a human eye to view, through the window unit 402, a virtual image formed by the image light. The image magnification unit 403 is configured to reflect the image light from the window unit 402 to the window unit 402.

Optionally, in the solutions of this application, the image magnification unit 403 is a free-form mirror. In some embodiments, to improve reflection effect of the image magnification unit 403 and reduce a light energy loss, a total reflection film is disposed on an inner surface (an inner side) of the image magnification unit.

Specifically, when a passenger views a video image through the display apparatus 400, the image generation unit 401 emits image light to the window unit 402. The image light is reflected by the window unit 402 and then incident to the image magnification unit 403, is reflected by the image magnification unit 403 and then incident to the window unit 402, and is transmitted by the window unit 402. In this case, the passenger may view, through the window unit 402, a large-format video image located at a distance (for example, 600 mm shown in FIG. 4).

In some embodiments, the window unit 402 is tilted relative to a vertical direction (which may also be referred to as a plumb direction). In other words, there is a specific included angle α between the window unit 402 and the vertical direction. When the display apparatus 400 is mounted on a seat back, a range of the included angle α between the window unit 402 and the vertical direction is 0° ≤ α ≤ 45°.

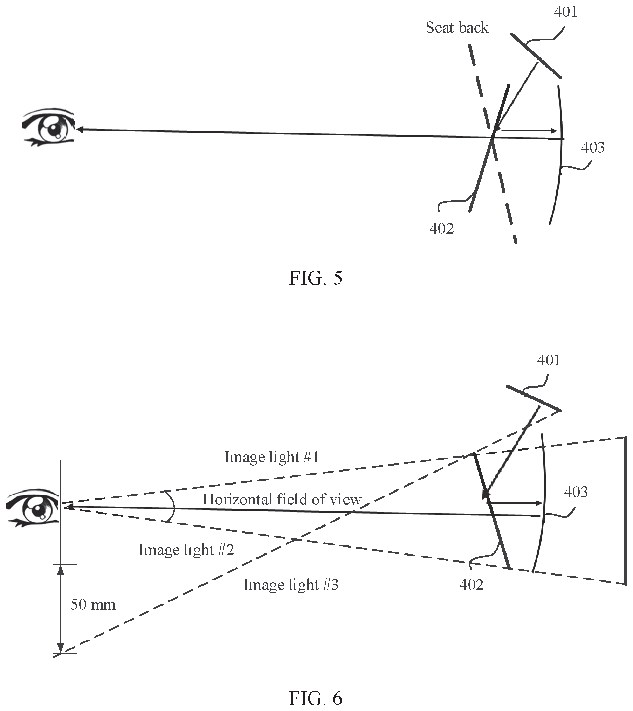

It should be noted that setting of the included angle α between the window unit 402 and the vertical direction is related to a plurality of factors, including but not limited to a view angle of a viewer, a mounting position, a usage scenario, and the like. For example, when the display apparatus 400 is mounted on the seat back, in other words, in the usage scenario shown in FIG. 3, for riding comfort, the seat back may usually tilt backward, and a range of an included angle β between the seat and the vertical direction is generally 22° ≤ β ≤ 25°. In addition, when the human eye views the virtual image through the window unit 402, a line of sight has a specific angle of depression relative to a horizontal direction. Moreover, safety of a rear-row passenger needs to be considered to prevent the display apparatus 400 from colliding with the passenger. Therefore, when the display device 400 is mounted (or not used, or delivered from a factory), a tilted plane of the window unit 402 is usually required to remain parallel to a tilted plane of the seat back (in other words, a tilt direction of the window unit 402 is consistent with a tilt direction of the seat back), to prevent the window unit 402 from being excessively tilted and protruding beyond the seat back and from causing a security risk. For example, as shown in FIG. 5, if the tilted plane of the window unit 402 is inconsistent with the tilted plane of the seat back, in other words, the tilt direction of the window unit 402 is not parallel to the tilt direction of the seat back, the display apparatus 400 protrudes beyond the seat back, and consequently, the display apparatus 400 is likely to collide with the passenger. Therefore, in consideration of factors such as a tilt range of the seat, a line-of-sight angle present when the human eye views the image, and use safety, in the solutions of this application, the range of the included angle α between the window unit 402 and the vertical direction is set to 0° ≤ α ≤ 45°, for example, a preferred value of 25°, so that, when the display apparatus 400 is mounted, safety of the passenger and aesthetics of a seat in a vehicle can be ensured.

It may be understood that, to prevent the passenger from being interfered, when viewing the image, by the light emitted by the image generation unit 401, in other words, to make the passenger not simultaneously view an image on the image generation unit 401 when viewing a displayed image, in this embodiment of this application, a position of the image generation unit 401 is arranged above the window unit 402 and the image magnification unit 403. For example, in a diagram of a horizontal field of view shown in FIG. 6, a horizontal viewing limit of the human eye is edges of an image generated by image light #1 and image light #2. Therefore, when the image generation unit 401 is located outside a range of image light corresponding to a maximum field of view, the human eye does not view the image generation unit 401 when viewing an image.

In other words, when a viewing distance of the human eye (that is, a distance between the human eye and the window unit 402, for example, 250 mm) is determined, and a tilt angle of the window unit 402 is determined, the position of the image generation unit 401 may be determined based on a relationship shown in FIG. 6. It may be understood that the image generation unit 401 needs to be located outside image light corresponding to a maximum horizontal field of view, and also needs to be located outside image light corresponding to a vertical field of view, so that the human eye does not view the image on the image generation unit in both the horizontal direction and the vertical direction when viewing an image.

In addition, the position of the image generation unit 401 is further related to a range of an eye box of the display apparatus 400. It is usually required that edge image light (namely, image light #3 in FIG. 6) emitted by the image generation unit 401 can be emitted to a position that is approximately 50 mm below an edge of the eye box after passing through an upper edge of the window unit 402, to ensure that the human eye does not simultaneously view the image on the image generation unit 401 when viewing an image.

It should be noted that "above" mentioned in the descriptions of FIG. 6 is a relative position. For example, it may be understood that, when a person views an image, the upper edge of the window unit relative to a lower edge of the window unit is "above" defined in the solutions of this application. Alternatively, it may be understood that, with respect to cabin space, an orientation of the human eye relative to a cabin ground is "above" defined in the solutions of this application. It may be understood that "below" is an opposite direction of "above".

In some embodiments, an aspect ratio of the image generation unit 401 in the display apparatus 400 provided in this application is 16:9. To reduce a thickness of the display apparatus 400, in some other embodiments, the aspect ratio of the image generation unit 401 may be set to 21:9.

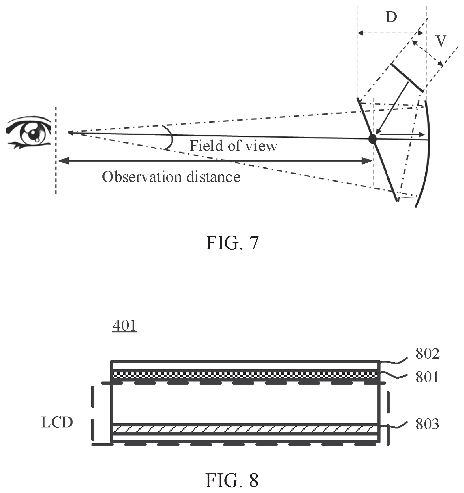

FIG. 7 is a diagram of a thickness D of a display apparatus and a width V of an image generation unit according to an embodiment of this application. It can be learned from FIG. 7 that a size (present when the tilt angle is fixed) of the window unit 402 is related to a field of view of the display apparatus (the field of view is a field of view corresponding to a diagonal length of the displayed image), a viewing distance, and a range of a viewing eye box. A larger field of view of the display apparatus indicates a larger size of the window unit 402. A longer viewing distance indicates a larger size of the window unit 402. A larger range of the viewing eye box indicates a larger size of the window unit 402. When the size of the window unit 402 increases and it is ensured that the field of view of the display apparatus 400 is unchanged, the thickness D of the display apparatus 400 increases. In addition, the width V of the image generation unit 401 adapts to the size of the window unit 402 to some extent, to ensure display performance of the display apparatus 400. In this case, to balance display effect and ensure that the field of view of the display apparatus is unchanged, the width of the image generation unit 401 may be reduced, to reduce the thickness D of the display apparatus 400.

Therefore, to further reduce the thickness of the display apparatus 400, in some embodiments, the aspect ratio of the image generation unit 401 may be increased from 16:9 to 21:9, thereby achieving the objective of reducing the thickness of the display apparatus.

It should be noted that the image generation unit 401 may be an LCD display, a liquid crystal on silicon (liquid crystal on silicon, LCOS) display, an organic light-emitting diode (Organic Light-Emitting Diode, OLED) display, a micro-light-emitting diode (Micro-LED) display, a display using a mini-LED display technology, a digital light processing (Digital Light Processing, DLP) display, a micro-electro-mechanical system (Micro-Electro-Mechanical System, MEMS) display, or the like. This is not limited in this application.

FIG. 8 shows a possible structure of an image generation unit 401 according to an embodiment of this application. Optionally, in some embodiments, the image generation unit 401 further includes an anti-glare (ANTI-glare, AG) film 801. As shown in FIG. 8, the AG film 801 may be disposed on a light exit surface of the image generation unit 401, to achieve objectives of improving a contrast ratio of a picture generated by the image generation unit 401 and improving a viewing angle of the image generation unit 401. The AG film 801 may be formed on the light exit surface of the image generation unit 401 through a process including but not limited to a glass etching technology, a particle addition technology, a phase separation technology, or the like. This is not limited in this application. For example, as shown in FIG. 8, when the AG film 801 is disposed on a light exit surface of the LCD display, the LCD display including the AG film may be formed.

In some other embodiments, a quarter-wave plate 802 may be further disposed on the light exit surface of the image generation unit 401, so that the image light emitted by the image generation unit 401 is circularly polarized light or elliptically polarized light, thereby achieving an objective of improving uniformity of light emitted by the image generation unit 401. It should be noted that, when the window unit 402 further includes a polarization layer, disposition of the quarter-wave plate 802 on the light exit surface of the image generation unit 401 may further help the window unit 402 eliminate stray light from an environment, thereby improving the display effect.

In addition, when the image generation unit 401 is the LCD display, to reduce impact of screen backlight on an image, reduce a light emitting viewing angle, and improve the display effect, in some embodiments, a privacy protection film 803 or another collimation unit 803 configured to narrow the light emitting angle may be disposed in a backlight part of the LCD.

It should be noted that FIG. 8 is merely an example provided in this embodiment of this application, and constitutes no limitation on the protection scope of this application. In other words, one or more AG films, one or more quarter-wave plates, one or more privacy protection films, and the like in the examples in the foregoing descriptions may be selected for the image generation unit 401 based on different application requirements and different displays.

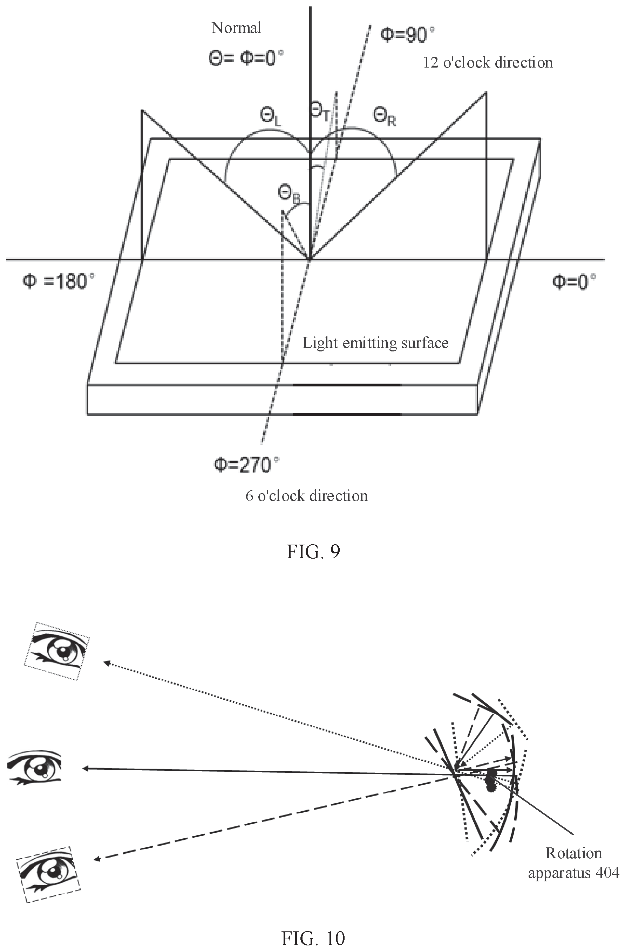

FIG. 9 is a diagram of a light exit angle θ of an image generation unit 401 according to an embodiment of this application. It can be learned from FIG. 9 that, in the solutions of this application, a light exit angle (*θ_{L}, θ_{R}*) of the image generation unit 401 in a length direction is 25°, and a light exit angle (*θ_{T}, θ_{B}*) of the image generation unit 401 in a width direction is less than or equal to 30°.

It should be noted that, in the solutions of this application, a range of light emission luminance Y of the image generation unit 401 is Y≥1000 nits.

It may be understood that, because heights of passengers in the cabin are different, to cater to viewing experience of passengers of different heights and optimize viewing comfort, in some embodiments, rotation apparatuses 404 may be disposed on two sides of a housing of the display apparatus 400.

Optionally, the rotation apparatus 404 is a manual apparatus, for example, a rotation shaft. Alternatively, the rotation apparatus 404 is an electric apparatus, for example, a rotation motor. Specifically, as shown in FIG. 10, when the rotation apparatus 404 is the manual apparatus, the viewing angle may be adjusted by manually pulling the display apparatus up and down. Alternatively, when the rotation apparatus 404 is the electric apparatus, the viewing angle is adjusted by starting and stopping, through a button, controlling the display apparatus to rotate in the vertical direction.

Based on the foregoing solution, the display apparatus 400 provided in this embodiment of this application can implement long-distance and large-format in-vehicle display effect, where a range of the VID is VID ≥ 2 m, a range of a vertical eye box H is H ≥ 20 mm, and a range of the FOV is 15° ≤ FOV ≤ 30°. Compared with an existing solution, the display apparatus provided in this embodiment of this application has a small quantity of elements, a small thickness, simple assembly, and a compact size, and therefore can be easily mounted in narrow space (including positions such as a seat headrest, a seat back, a passenger-side dashboard, and the like) in the vehicle.

The following describes in detail the window unit in the display apparatus provided in this application.

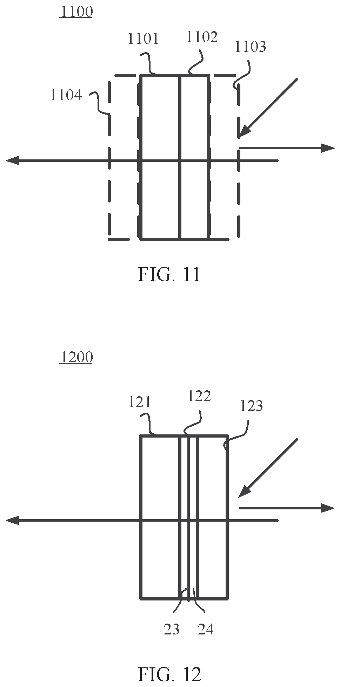

FIG. 11 is a diagram of a structure of a first type of window unit 1100 according to an embodiment of this application. It may be understood that the window unit 1100 is an example of the window unit 402 shown in FIG. 4. As shown in FIG. 11, the window unit 1100 includes an organic layer 1101 and an inorganic layer 1102. The inorganic layer 1102 is configured to: reflect the image light from the image generation unit 401, and transmit the image light from the image magnification unit 403 to the organic layer 1101. The organic layer 1101 is configured to transmit the image light from the inorganic layer 1102 to the human eye.

Optionally, a material of the inorganic layer 1102 is inorganic glass. A material of the organic layer 1101 may be thermoplastic, for example, a PP material, a PC material, or a PMMA material, and is configured to improve a chemical resistance property, a collision resistance property, and the like of the window unit 1100.

Optionally, the inorganic layer 1102 and the organic layer 1101 are bonded together through an optical clear adhesive (optically clear adhesive, OCA).

In some embodiments, the window unit 1100 may further include a beam-splitting film 1103. The beam-splitting film 1103 is arranged on an inner surface of the inorganic layer. The beam-splitting film 1103 is configured to: reflect the image light from the image generation unit 401, and transmit the image light from the image magnification unit 403 to the organic layer 1101. The beam-splitting film 1103 is arranged, so that reflection performance of the window unit 1100 is improved, thereby reducing the light energy loss and improving the display effect.

Because the window unit 1100 is exposed outside the display apparatus, there is a case in which external ambient light is incident to the organic layer 1101 and reflected to the human eye. To reduce impact of the ambient light on viewing effect, in some other embodiments, the window unit 1100 may further include an anti-reflection film 1104. The anti-reflection film 1104 is arranged on an outer surface of the organic layer 1101 to reduce reflection of stray light from outside the display apparatus on the display apparatus.

It should be noted that different film layers may be disposed on a surface of the window unit 1100 according to requirements of an application scenario and product performance. For example, only the beam-splitting film 1103 or the anti-reflection film 1104 may be disposed, or both the beam-splitting film 1103 and the anti-reflection film 1104 may be disposed. In addition, the beam-splitting film 1103 and the anti-reflection film 1104 are merely examples. Another element or thin film may be further disposed on the window unit 1100. This can also improve reflection performance and/or anti-reflection performance of the window unit 1100. These elements or thin films fall within the protection scope of this application.

To further eliminate impact of external stray light on the displayed image and improve user experience, FIG. 12 is a diagram of a structure of a second type of window unit 1200 according to an embodiment of this application. Compared with the window unit 1100 in FIG. 11, the window unit 1200 eliminates the stray light by disposing a polarization layer on an organic layer and an inorganic layer. It may be understood that the window unit 1200 is an example of the window unit 402 shown in FIG. 4. As shown in FIG. 12, the window unit 1200 sequentially comprises the inorganic layer 123, the polarization layer 122, and the organic layer 121 in a transmission direction of the image light. The inorganic layer 123 is configured to: reflect the image light from the image generation unit 401, and transmit the image light from the image magnification unit 403 to the polarization layer 122. The polarization layer 122 is configured to: eliminate stray light from outside the display apparatus, and transmit the image light from the inorganic layer 123 to the organic layer 121. The organic layer 121 is configured to transmit the image light from the polarization layer 122.

Optionally, the polarization layer 122 and the organic layer 121 are bonded together through an OCA.

In the solution of this application, a range of a thickness of the inorganic layer 123 is 1.2 mm ≤ h1 ≤ 2 mm, a thickness h2 of the polarization layer 122 is 0.3 mm ≤ h2 ≤ 0.6 mm, and a range of a thickness of the organic layer 1201 is 1 mm ≤ h3 ≤ 2.5 mm.

In an implementation, a structure of the polarization layer 122 may be shown in FIG. 12, and includes a linear polarizer 23 and a quarter-wave plate 24.

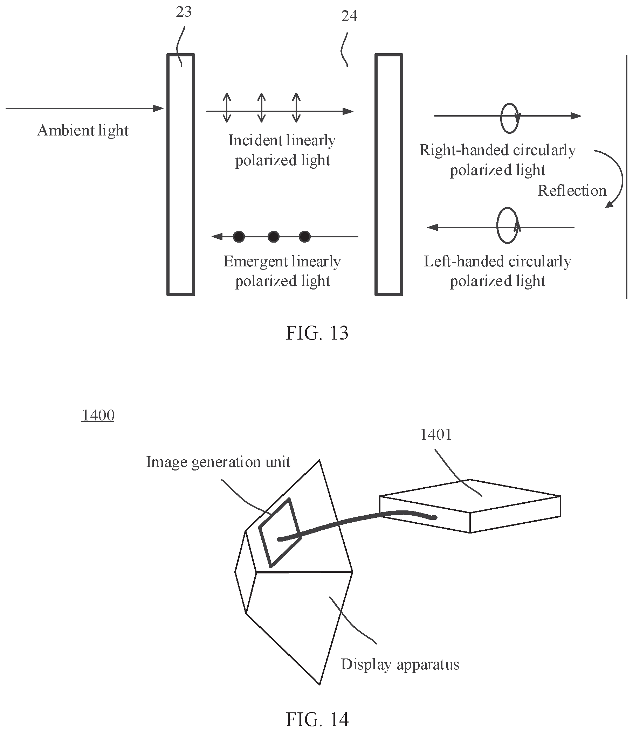

For example, FIG. 13 is a diagram of a principle of eliminating stray light by a window unit 1200 according to an embodiment of this application. As shown in FIG. 13, after the ambient light from outside the display apparatus passes through the linear polarizer 23, only half of linearly polarized light is left. After passing through the quarter-wave plate 24, the linearly polarized light is converted into right-handed circularly polarized light (which may also be left-handed circularly polarized light, and a direction is determined by an included angle between the quarter-wave plate 24 and an optical axis of the linear polarizer 23). Then, the right-handed circularly polarized light is reflected by the inorganic layer 23 (or the image magnification unit, where a part of light may be transmitted to the inorganic layer 23 to reach the image magnification unit) to form left-handed circularly polarized light (when left-handed circularly polarized light is incident, right-handed circularly polarized light is generated). After the left-handed circularly polarized light passes through the quarter-wave plate 24 again, emergent linearly polarized light that is perpendicular to a polarization direction of the incident polarized light is generated. The emergent linearly polarized light cannot reach the human eye through the linear polarizer 23, thereby eliminating the ambient light that is incident to the display apparatus.

Optionally, to improve extinction effect, the polarization layer 122 may further include a plurality of linear polarizers whose optical axis directions are parallel.

In addition, it should be further noted that, in the solution of this application, the polarization layer 122 is disposed between the inorganic layer 123 and the organic layer 121. In other words, a structure of the window unit 1200 provided in this application makes the image light to first pass through the polarization layer 122 and then pass through the organic layer 121. Such a layer arrangement sequence can avoid a bright/dark flickering spot in the displayed image, thereby ensuring optimal display effect.

It may be understood that, in the window unit 1200, different film layers, for example, at least one of the beam-splitting film 1103 and the anti-reflection film 1104 mentioned above, may alternatively be disposed. Details are not described herein again. In addition, for materials of the inorganic layer 123 and the organic layer 121, refer to the related descriptions of the window unit 1100 shown in the foregoing figure. Details are not described herein again.

Generally, when an optical system generates an image, aberration and distortion usually exist. To further improve the display effect, an embodiment of this application provides a display system 1400. As shown in FIG. 14, the display system 1400 includes a processing device 1401 and a display apparatus provided in this application. The processor 1401 is electrically connected to an image generation unit in the display apparatus.

In an implementation, the processing device 1401 is configured to: obtain first image information from an image source, perform pre-distortion processing on a first image corresponding to the first image information to generate second image information corresponding to the first image, and send the second image information to the image generation unit, so that the image generation unit generates an image based on the second image information and emits image light.

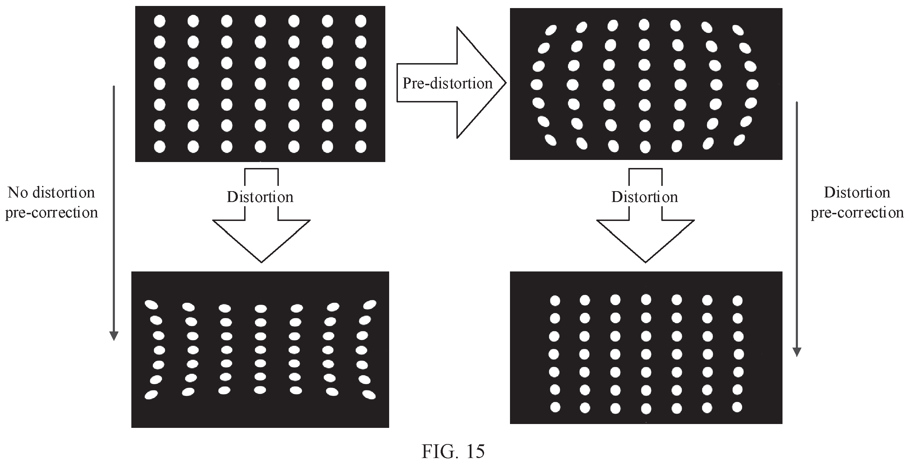

It should be noted that, for a principle of performing distortion pre-correction on the first image by the processing device 1401 by using the first image information, reference may be made to a procedure shown in FIG. 15. Because a generated image is distorted when the image light is emitted by the display apparatus, the processing device 1401 first performs pre-distortion processing on the obtained first image information according to a pre-distortion processing algorithm, to generate image information corresponding to a reversely distorted image (that is, a second image), so that the image light emitted by the image generation unit is image light of the reversely distorted image. After the image light is emitted by the display apparatus, through inherent distortion of the display apparatus, an image displayed by the display apparatus is no longer distorted.

In an implementation, the processing device 1401 is configured to: obtain first image information from a second processor, perform pre-distortion processing on a first image corresponding to the first image information to generate second image information corresponding to the first image, and send the second image information to the image generation unit, so that the image generation unit generates an image based on the second image information and emits image light. The second processor is configured to: obtain the first image information from an image source, and perform processing including but not limited to image compression, enhanced restoration, and matching description recognition on the first image information.

In some embodiments, the processing device 1401 can further perform other processing, for example, processing such as image compression, enhanced restoration, and matching description recognition, on the image information from the video source, so that processed image information can adapt to the image generation unit.

An embodiment of this application further provides a transportation means, and the foregoing display system is mounted in the transportation means. It may be understood that a transportation means to which the solutions of this application are applicable includes but is not limited to a vehicle, an airplane, a train, a ship, or the like.

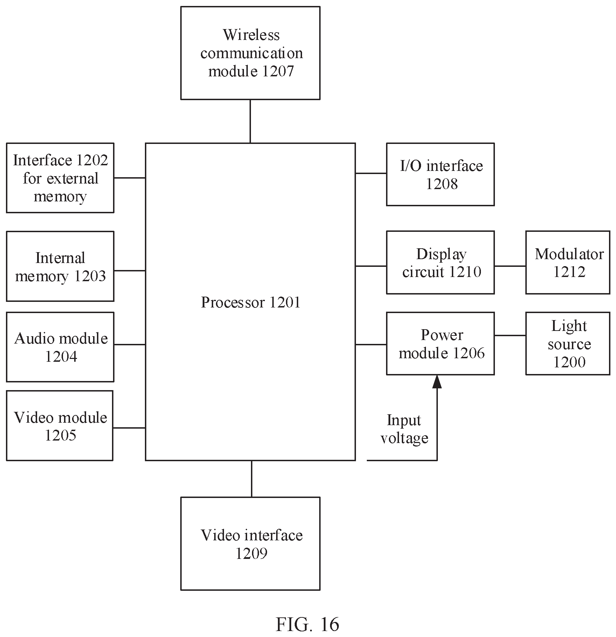

FIG. 16 is a diagram of a circuit of a display apparatus according to an embodiment of this application. As shown in FIG. 16, the circuit of the display apparatus mainly includes a main processor (host CPU) 1201, an interface 1202 for external memory, an internal memory 1203, an audio module 1204, a video module 1205, a power module 1206, a wireless communication module 1207, an I/O interface 1208, a video interface 1209, a display circuit 1210, a modulator 1212, and the like. The main processor 1201 may be connected, through a bus, to peripheral elements of the main processor, for example, the interface 1202 for external memory, the internal memory 1203, the audio module 1204, the video module 1205, the power module 1206, the wireless communication module 1207, the I/O interface 1208, the video interface 1209, and the display circuit 1210. The main processor 1201 may be referred to as a front-end processor.

In addition, the diagram of the circuit in this embodiment of this application does not constitute a specific limitation on the display apparatus. In some other embodiments of this application, the display apparatus may include more or fewer components than those shown in the figure, some components may be combined, some components may be split, or there may be different component arrangements. The components shown in the figure may be implemented by hardware, software, or a combination of software and hardware.

The main processor 1201 includes one or more processing units. For example, the main processor 1201 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-Network Processing Unit, NPU). Different processing units may be independent components, or may be integrated into one or more processors.

A memory may be further disposed in the main processor 1201, and is configured to store instructions and data. In some embodiments, the memory in the main processor 1201 is a cache. The memory may store instructions or data just used or cyclically used by the main processor 1201. If the main processor 1201 needs to use the instructions or the data again, the main processor 1201 may directly invoke the instructions or the data from the memory. This avoids repeated access and reduces waiting time of the main processor 1201, thereby improving system efficiency.

In some embodiments, the display apparatus may further include a plurality of input/output (Input/Output, I/O) interfaces 1208 connected to the main processor 1201. The interface 1208 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1208 may be connected to a device, for example, a mouse, a touchpad, a keyboard, a camera, a speaker/loudspeaker, or a microphone, or may be connected to a physical button (for example, a volume button, a brightness adjustment button, or a power button) on the display apparatus.

The interface 1202 for external memory may be configured to connect to an external storage card, for example, a micro SD card, to extend a storage capability of the display apparatus. The external storage card communicates with the main processor 1201 through the interface 1202 for external memory, to achieve a data storage function.

The internal memory 1203 may be configured to store computer-executable program code. The executable program code includes instructions. The internal memory 1203 may include a program storage area and a data storage area. The program storage area may store an operating system, an application required by at least one function (for example, a call function or a time setting function), and the like. The data storage area may store data (for example, an address book and world time) created in a process of using the display apparatus, and the like. In addition, the internal memory 1203 may include a high-speed random access memory, and may further include a non-volatile memory, for example, at least one magnetic disk storage device, a flash memory, or a universal flash storage (Universal Flash Storage, UFS). The main processor 1201 executes various functional applications and data processing of the display apparatus by running the instructions stored in the internal memory 1203 and/or the instructions stored in the memory disposed in the main processor 1201.

The display apparatus may achieve an audio function, for example, music playing and calling, through the audio module 1204, the application processor, and the like.

The audio module 1204 is configured to convert digital audio information into an analog audio signal for output, and is also configured to convert an analog audio input into a digital audio signal. The audio module 1204 may be further configured to: encode and decode an audio signal, for example, perform voice playing or voice recording. In some embodiments, the audio module 1204 may be disposed in the main processor 1201, or a part of functional modules of the audio module 1204 are disposed in the main processor 1201.

The video interface 1209 may receive an externally input audio and video signal, and may be specifically a high definition multimedia interface (High Definition Multimedia Interface, HDMI), a digital visual interface (Digital Visual Interface, DVI), a video graphics array (Video Graphics Array, VGA), a display port (Display port, DP), or the like. The video interface 1209 may further output a video. When the display apparatus is used as in-vehicle display, the video interface 1209 may receive a speed signal and a power signal that are input by a peripheral device, and may further receive an externally input VR video signal. When the display apparatus is used, the video interface 1209 may receive a video signal that is input by an external computer or terminal device.

The video module 1205 may decode a video that is input through the video interface 1209, for example, perform H.264 decoding. The video module may further encode a video collected by the display apparatus, for example, perform H.264 encoding on a video captured by an external camera. In addition, the main processor 1201 may also decode the video that is input through the video interface 1209, and then output a decoded image signal to the display circuit 1210.

The display circuit 1210 and the modulator 1212 are configured to display a corresponding image. In this embodiment, the video interface 1209 receives an externally input video source signal. The video module 1205 performs decoding and/or digitization processing and then outputs one or more image signals to the display circuit 1210. The display circuit 1210 drives, based on the input image signal, the modulator 1212 to perform imaging on incident polarized light, to output image light. In addition, the main processor 1201 may also output one or more image signals to the display circuit 1210.

In this embodiment, the display circuit 1210 and the modulator 1212 belong to electronic elements in the image generation unit, and the display circuit 1210 may be referred to as a drive circuit.

The power module 1206 is configured to supply power to the main processor 1201 and a light source 1200 based on input electric power (for example, a direct current). The power module 1206 may include a rechargeable battery, and the rechargeable battery may supply power to the main processor 1201 and the light source 1200. Light emitted by the light source 1200 may be transmitted to the modulator 1212 for imaging, to form an image light signal.

The wireless communication module 1207 may enable the display apparatus to perform wireless communication with the outside, and may provide wireless communication solutions such as a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near-field communication (Near-Field Communication, NFC) technology, and an infrared (Infrared, IR) technology. The wireless communication module 1207 may be one or more devices integrating at least one communication processing module. The wireless communication module 1207 receives an electromagnetic wave through the antenna, performs frequency modulation and filtering processing on an electromagnetic wave signal, and sends a processed signal to the main processor 1201. The wireless communication module 1207 may further receive a to-be-sent signal from the main processor 1201, perform frequency modulation and amplification on the signal, and convert a processed signal into an electromagnetic wave for radiation through the antenna.

In addition, in addition to being input through the video interface 1209, video data decoded by the video module 1205 may be further received by the wireless communication module 1207 in a wireless manner or read from an external memory. For example, the display apparatus may receive video data from a terminal device or an in-vehicle entertainment system through a wireless local area network in a vehicle. The display apparatus may further read audio and video data stored in the external memory.

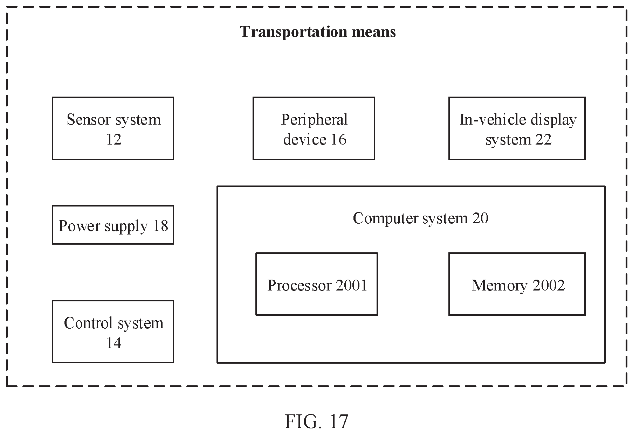

The display apparatus may be mounted on a transportation means. FIG. 17 is a diagram of a possible functional framework of a transportation means according to an embodiment of this application.

As shown in FIG. 17, the functional framework of the transportation means may include various subsystems, for example, a sensor system 12, a control system 14, one or more peripheral devices 16 (one peripheral device is used as an example in the figure), a power supply 18, a computer system 20, and an in-vehicle display system 22. Optionally, the transportation means may further include another functional system, for example, an engine system that provides power to the transportation means. This is not limited herein in this application.

The sensor system 12 may include several detection apparatuses. These detection apparatuses can sense measured information, and convert, according to a specific rule, the sensed information into an electrical signal or information in another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 14 may include several elements, for example, a steering unit, a brake unit, a lighting system, an autonomous driving system, a map navigation system, a network time system, and an obstacle avoidance system shown in the figure. Optionally, the control system 14 may further include elements such as a throttle controller configured to control a traveling speed of a vehicle and an engine controller. This is not limited in this application.

The peripheral device 16 may include several elements such as a communication system, a touchscreen, a user interface, a microphone, and a speaker shown in the figure. The communication system is configured to implement network communication between the transportation means and a device other than the transportation means. During actual application, the communication system may implement network communication between the transportation means and another device by using a wireless communication technology or a wired communication technology. The wired communication technology may mean that the vehicle communicates with the another device through a network cable, an optical fiber, or the like.

The power supply 18 represents a system used to provide power or energy for the vehicle, and may include but is not limited to a rechargeable lithium battery, a lead-acid battery, or the like. During actual application, one or more battery modules in the power supply are configured to provide electrical energy or energy for starting the vehicle. A type and a material of the power supply are not limited in this application.

Several functions of the transportation means are all controlled and achieved by the computer system 20. The computer system 20 may include one or more processors 2001 (one processor is shown as an example in the figure) and a memory 2002 (which may also be referred to as a storage apparatus). During actual application, the memory 2002 is also inside the computer system 20, or may also be outside the computer system 20, for example, used as a cache in the transportation means. This is not limited in this application. The processor 2001 may include one or more general-purpose processors, for example, a graphics processing unit (graphics processing unit, GPU).

The processor 2001 may be configured to run a related program stored in the memory 2002 or instructions corresponding to a program, to achieve a corresponding function of the vehicle.

The memory 2002 may include a volatile memory (volatile memory), for example, a RAM. The memory may also include a non-volatile memory (non-volatile memory), for example, a ROM, a flash memory (flash memory), an HDD, or a solid-state drive SSD. The memory 2002 may further include a combination of the foregoing types of memories. The memory 2002 may be configured to store a set of program code or instructions corresponding to program code, so that the processor 2001 invokes the program code or the instructions stored in the memory 2002 to achieve a corresponding function of the vehicle. In this application, the memory 2002 may store a set of program code used to control the vehicle. The processor 2001 may control safe traveling of the vehicle by invoking the program code. A manner of implementing safe traveling of the vehicle is specifically described in detail below in this application.

Optionally, in addition to storing the program code or the instructions, the memory 2002 may further store information such as a road map, a driving route, and sensor data. The computer system 20 may achieve a vehicle-related function in combination with another element in the diagram of the functional framework of the vehicle, for example, the sensor and the GPS in the sensor system. For example, the computer system 20 may control a driving direction, a driving speed, or the like of the transportation means based on a data input of the sensor system 12. This is not limited in this application.

The in-vehicle display system 22 may include several elements, for example, a controller and a vehicle-mounted display. The controller 222 is configured to: generate an image (for example, an image of VR content) based on a user instruction, and send the image to the vehicle-mounted display for display. The vehicle-mounted display may include an image generation unit, a window unit, and an image magnification unit. A passenger may view, through the window unit, a target image presented by the vehicle-mounted display. Functions of a part of elements in the in-vehicle display system may alternatively be achieved by another subsystem of the vehicle. For example, the controller may alternatively be an element in the control system.

In this application, FIG. 17 shows that four subsystems are included. The sensor system 12, the control system 14, the computer system 20, and the in-vehicle display system 22 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

The transportation means may be a car, a truck, a bus, a ship, an airplane, a helicopter, a recreational vehicle, a train, or the like. This is not particularly limited in embodiments of this application.

Unless otherwise defined, a technical term or a scientific term used herein should have a general meaning understood by a person of ordinary skill in the art of the present disclosure.

The foregoing descriptions are merely an embodiment of this application, but are not intended to limit this application. Any modification, equivalent replacement, or improvement made based on this application shall fall within the protection scope of this application.

## Claims

1. A display apparatus, used for in-vehicle display, wherein the display apparatus comprises an image generation unit, a window unit, and an image magnification unit, wherein
the image generation unit is configured to emit image light to the window unit;
the window unit is configured to: reflect the image light from the image generation unit to the image magnification unit, and transmit the image light from the image magnification unit, and the window unit is further used for a human eye to view, through the window unit, a virtual image formed by the image light; and
the image magnification unit is configured to reflect the image light from the window unit to the window unit.

2. The display apparatus according to claim 1, wherein the window unit is tilted relative to a vertical direction.

3. The display apparatus according to claim 2, wherein a range of an included angle α between the window unit and the vertical direction is 0° ≤ α ≤ 45°.

4. The display apparatus according to any one of claims 1 to 3, wherein the image generation unit is located above the window unit and the image magnification unit.

5. The display apparatus according to any one of claims 1 to 4, wherein a range of a virtual image distance VID of the display apparatus is VID ≥ 2 m.

6. The display apparatus according to any one of claims 1 to 5, wherein a thickness of the display apparatus is related to the virtual image distance VID, a range of an eye box, and a field of view FOV that are of the display apparatus, and the thickness of the display apparatus is a maximum horizontal distance between the window unit and the image magnification unit.

7. The display apparatus according to any one of claims 1 to 6, wherein a range of a vertical eye box H of the display apparatus is H ≥ 20 mm.

8. The display apparatus according to any one of claims 1 to 7, wherein a range of the field of view FOV of the display apparatus is 15° ≤ FOV ≤ 30°.

9. The display apparatus according to any one of claims 1 to 8, wherein an aspect ratio of the image generation unit is 21:9 or 16:9.

10. The display apparatus according to any one of claims 1 to 9, wherein a range of light emission luminance Y of the image generation unit is Y ≥ 1000 nits.

11. The display apparatus according to any one of claims 1 to 10, wherein the image generation unit further comprises an anti-glare AG film.

12. The display apparatus according to any one of claims 1 to 11, wherein the image generation unit further comprises a privacy protection film, or a collimation unit configured to narrow a light emitting angle of the image generation unit.

13. The display apparatus according to any one of claims 1 to 12, wherein the image generation unit further comprises a first quarter-wave plate.

14. The display apparatus according to any one of claims 1 to 13, wherein the window unit sequentially comprises an inorganic layer and an organic layer in a transmission direction of the image light;
the inorganic layer is specifically configured to: reflect the image light from the image generation unit, and transmit the image light from the image magnification unit to the organic layer; and
the organic layer is specifically configured to transmit the image light from the inorganic layer.

15. The display apparatus according to any one of claims 1 to 14, wherein the window unit sequentially comprises an inorganic layer, a polarization layer, and an organic layer in a transmission direction of the image light, and the polarization layer is arranged on a first surface of the inorganic layer;
the inorganic layer is specifically configured to: reflect the image light from the image generation unit, and transmit the image light from the image magnification unit to the polarization layer;
the polarization layer is specifically configured to: eliminate stray light from the outside of the display apparatus, and transmit the image light from the inorganic layer to the organic layer; and
the organic layer is specifically configured to transmit the image light from the polarization layer.

16. The display apparatus according to claim 15, wherein the polarization layer comprises a second quarter-wave plate and at least one linear polarizer.

17. The display apparatus according to claim 15 or 16, wherein
a range of a thickness h1 of the inorganic layer is 1.2 mm ≤ h1 ≤ 2 mm, a thickness h2 of the polarization layer is 0.3 mm ≤ h2 ≤ 0.6 mm, and a range of a thickness h3 of the organic layer is 1 mm ≤ h3 ≤ 2.5 mm.

18. The display apparatus according to any one of claims 15 to 17, wherein the window unit further comprises a beam-splitting film, the beam-splitting film is arranged on a second surface of the inorganic layer, and the beam-splitting film is configured to: reflect the image light from the image generation unit, and transmit the image light from the image magnification unit to the inorganic layer.

19. The display apparatus according to any one of claims 15 to 18, wherein the window unit further comprises an anti-reflection film, and the anti-reflection film is arranged on an outer surface of the organic layer.

20. The display apparatus according to any one of claims 1 to 19, wherein the image magnification unit is a free-form mirror.

21. The display apparatus according to any one of claims 1 to 20, wherein a total reflection film is arranged on an inner side of the image magnification unit.

22. The display apparatus according to any one of claims 1 to 21, wherein the display apparatus further comprises a housing.

23. The display apparatus according to claim 22, wherein rotation apparatuses are disposed on two sides of the housing, and the rotation apparatus is configured to manually or electrically drive the display system to rotate in the vertical direction.

24. The display apparatus according to any one of claims 1 to 23, wherein the image generation unit is configured to generate an image based on predistortion-processed image information.

25. A processing device, comprising an obtaining module, a sending module, and a processing module, wherein
the obtaining module is configured to obtain first image information;
the processing module is configured to perform pre-distortion processing on a first image corresponding to the first image information to generate second image information corresponding to a second image; and
the sending module is configured to send the second image information to the image generation unit of the display apparatus according to any one of claims 1 to 24, wherein the second image information is used for the image generation unit to generate the second image.

26. A display system, comprising a first processor and the display apparatus according to any one of claims 1 to 24, wherein the first processor is electrically connected to the image generation unit; and
the first processor is configured to: obtain first image information, perform pre-distortion processing on a first image corresponding to the first image information to generate second image information corresponding to a second image, and send the second image information to the image generation unit.

27. A transportation means, comprising the display system according to claim 26.

28. The transportation means according to claim 27, wherein the display system is arranged in at least one of a seat headrest of the transportation means and a seat back of the transportation means.

29. The transportation means according to claim 27, wherein the display system is arranged in a passenger-side dashboard of the transportation means.

30. The transportation means according to any one of claims 27 to 29, wherein the first processor is configured to obtain the first image information from a video source.

31. The transportation means according to any one of claims 27 to 30, wherein the transportation means further comprises a second processor, and the second processor is electrically connected to the first processor; and
the second processor is configured to: obtain third image information from the video source, and preprocess the third image information to generate the first image information.
